# EUROPEAN PATENT APPLICATION

(11) **EP 4 852 162 A1**
(43) Date of publication of application: **09.12.2026**
(21) Application number: 25748216.6
(22) Date of filing: 20.01.2025
(51) Int. Cl.: H01M 50/107, H01M 50/133, H01M 50/167

(54) **CYLINDRICAL NONAQUEOUS ELECTROLYTE SECONDARY BATTERY**

(30) Priority: 31.01.2024 JP 2024012731
(71) Applicant: Panasonic Intellectual Property Management Co., Ltd., Kadoma-shi, Osaka 571-0057 (JP)
(72) Inventor: FURUTA, Yohei, kadoma-shi, Osaka 571-0057 (JP)
(74) Representative: Eisenführ Speiser
(86) International application number: PCT/JP2025/001579
(87) International publication number: WO 2025/164407

(57) **Abstract**

Provided is a nonaqueous electrolyte secondary battery in which the risk of breakage of a housing can is reduced. A cylindrical nonaqueous electrolyte secondary battery according to an embodiment comprises: a housing can having a cylindrical shape and including a bottom portion at one end and an opening portion at the other end; an electrode assembly and a nonaqueous electrolyte that are stored in a body portion of the housing can; and a sealing assembly that closes the opening portion. A grooved portion having a diameter smaller than that of the body portion of the housing can is formed between the opening portion and the body portion. The thickness t1 of an upper groove portion, which is located on the opening portion side relative to a minimum diameter portion in the grooved portion, is greater than the thickness t2 of the opening portion.

## Description

### TECHNICAL FIELD

The present disclosure relates to cylindrical non-aqueous electrolyte secondary batteries.

### BACKGROUND ART

In cylindrical non-aqueous electrolyte secondary batteries, a wound electrode assembly and a non-aqueous electrolyte are housed in a bottomed cylindrical housing can, and the inside of the housing can is sealed by crimping and fixing a sealing assembly in between a grooved portion and an opening end of the housing can via a gasket. In general, the grooved portion is formed in such a manner that a predetermined position on the wall surface of the rotating housing can is pressed inward and stretched. Accordingly, the wall thickness of the grooved portion is thinner than that of other sections of the wall surface of the housing can.

Patent Literature 1 discloses a technology for making a groove lower portion, which is located closer to the bottom side than a smallest diameter portion in the grooved portion, thicker than a body portion from the perspective of restraining damage to the grooved portion when gas is generated inside the battery.

### CITATION LIST

### PATENT LITERATURE

PATENT LITERATURE 1: International Publication No. WO 2018/173453

### SUMMARY

In recent years, there has been an increasing demand for reducing the weight of secondary batteries. While it is possible to reduce the weight by reducing the wall thickness of the housing can, it is necessary to restrain damage to the housing can to ensure the safety of the secondary batteries.

During the manufacture of secondary batteries, the sealing assembly may be pressed and inserted into the opening portion of the housing can, depending on a clearance between the inner diameter of the housing can and the outer diameter of the sealing assembly. As a result, a groove upper portion that is located closer to the opening portion than the smallest diameter portion in the grooved portion may be deformed and be damaged in the worst case. When strong pressure is applied to the sealing assembly in the state of the secondary battery, the groove upper portion may also be deformed and damaged.

It is an advantage of the present invention to provide a cylindrical non-aqueous electrolyte secondary battery in which a risk of damage to the housing can is reduced.

A cylindrical non-aqueous electrolyte secondary battery according to the present disclosure comprises: a housing can that is in a cylindrical shape with a bottom portion at one end and an opening portion at the other end; an electrode assembly and a non-aqueous electrolyte that are housed in a body portion of the housing can; and a sealing assembly that seals the opening portion, in which between the opening portion and the body portion, a grooved portion is provided in such a manner that a diameter of the housing can in the grooved portion is smaller than that in the body portion, and a groove upper portion that is located closer to the opening portion than a smallest diameter portion in the grooved portion has a thickness t1 that is larger than a thickness t2 of the opening portion.

The cylindrical non-aqueous electrolyte secondary battery according to the present disclosure has an excellent safety as the risk of damage to the housing can is reduced.

### BRIEF DESCRIPTION OF DRAWING

FIG. 1 is an axial sectional view of a cylindrical non-aqueous electrolyte secondary battery as one example of an embodiment.
FIG. 2 is an enlarged view of the vicinity of a grooved portion of a housing can in FIG. 1.

### DESCRIPTION OF EMBODIMENTS

Hereinafter, an example of the embodiment of the cylindrical non-aqueous electrolyte secondary battery according to the present disclosure will be described in detail with reference to the drawings. The embodiment described below is merely exemplary, and the present invention is not limited to the embodiment below. In addition, the present disclosure embraces any forms obtained by selectively combining each component member of the embodiment described below.

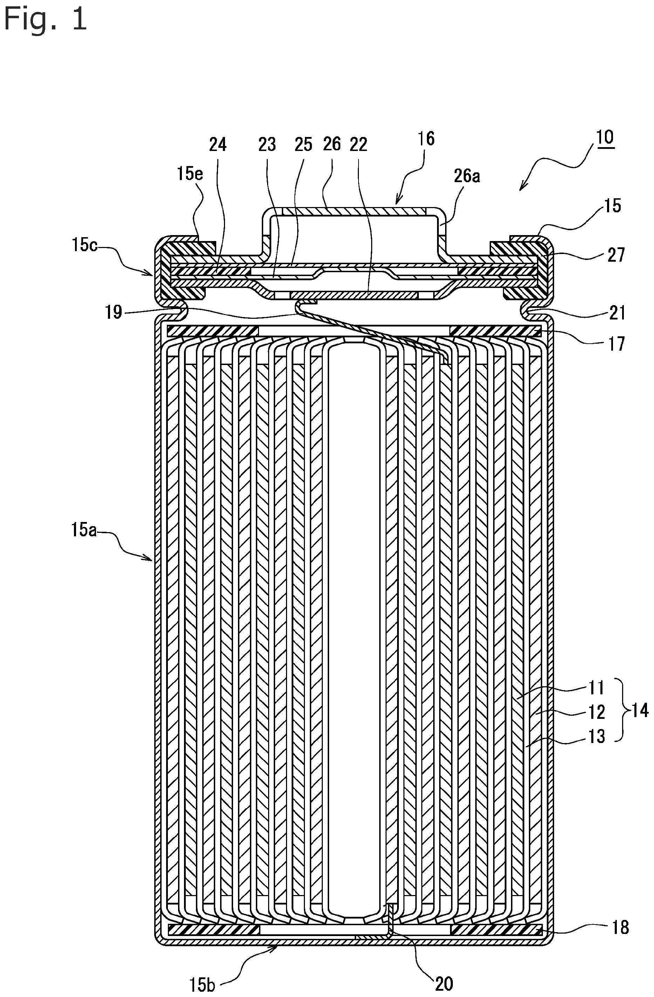

FIG. 1 is a longitudinal sectional view of a cylindrical non-aqueous electrolyte secondary battery 10 as an example of the embodiment. In the cylindrical non-aqueous electrolyte secondary battery 10 shown in FIG. 1, an electrode assembly 14 and a non-aqueous electrolyte (not shown) are housed in a body portion 15a of the housing can 15. Hereinafter, for the convenience of description, the side of a sealing assembly 16 is defined as "upper side", and the side of a bottom of the housing can 15 is defined as "lower side".

The electrode assembly 14 has a wound structure, in which a positive electrode 11 and a negative electrode 12 are wound with a separator 13 in between. The positive electrode 11 includes a strip-shaped positive electrode current collector and a positive electrode mixture layer formed on both the surfaces of the positive electrode current collector. For the positive electrode current collector, there may be used, for example, a foil of metal such as aluminum, or a film with the metal arranged on the surface thereof.

The positive electrode mixture layer is fabricated by applying a positive electrode mixture slurry containing a positive electrode active material, a conductive agent, a binding agent, and a solvent such as N-methyl-2-pyrrolidone (NMP) to both the surfaces of the positive electrode current collector, and then drying and compressing it. Examples of the positive electrode active material may include lithium-transition metal composite oxides containing transition metal elements, such as Co, Mn, or Ni. Examples of the conductive agent may include carbon materials such as carbon black (CB), acetylene black (AB), Ketjenblack, and graphite. Examples of the binding agent may include fluororesin such as polytetrafluoroethylene (PTFE) and polyvinylidene difluoride (PVdF), polyacrylonitrile (PAN), polyimide (PI), acrylic resin, and polyolefin resin.

The negative electrode 12 includes a strip-shaped negative electrode current collector and a negative electrode mixture layer formed on both the surfaces of the negative electrode current collector. For the negative electrode current collector, there may be used, for example, a foil of metal such as copper, or a film with the metal arranged on the surface thereof.

The negative electrode mixture layer is fabricated by applying a negative electrode mixture slurry containing a negative electrode active material, a binding agent, water, and the like to both the surfaces of the negative electrode current collector, and then drying and compressing it. Examples of the negative electrode active material may include carbon materials such as natural graphite and artificial graphite, metal that alloys with lithium, such as Si and Sn, or alloys containing these, and oxides thereof. Examples of the binding agent may include styrene-butadiene rubber (SBR), CMC or its salt, polyacrylic acid or its salt, and polyvinyl alcohol.

As the separator 13, a porous sheet with ion permeability and insulation properties is used. Specific examples of the porous sheet may include microporous thin films, woven fabrics, and non-woven fabrics. The materials of the separator may preferably be olefin resin such as polyethylene and polypropylene.

The non-aqueous electrolyte housed in the housing can 15 has ion conductivity (for example, lithium ion conductivity). The non-aqueous electrolyte may be a liquid electrolyte (electrolyte solution) or a solid electrolyte. The liquid electrolyte (electrolyte solution) contains non-aqueous solvent and electrolyte salt dissolved in the non-aqueous solvent. As the non-aqueous solvent, there may be used, for example, esters, ethers, nitriles, amides, and mixed solvents of two or more of these solvents. Examples of the non-aqueous solvent may include ethylene carbonate (EC), ethyl methyl carbonate (EMC), dimethyl carbonate (DMC), diethyl carbonate (DEC), and mixed solvents thereof. The non-aqueous solvent may contain a halogen substituted product (e.g., fluoroethylene carbonate) that replaces at least some of the hydrogen in these solvents with halogen atoms such as fluorine. As the electrolyte salt, lithium salt such as LiPF6 is used, for example.

As the solid electrolyte, there may be used, for example, solid or gel-like polymer electrolyte, inorganic solid electrolyte, or the like. The polymer electrolyte contains, for example, lithium salt and matrix polymer, or non-aqueous solvent, lithium salt, and matrix polymer. As the matrix polymer, a polymer material that turns into a gel by absorbing non-aqueous solvent is used, for example. As the polymer material, there may be used, for example, fluororesin, acrylic resin, and polyether resin, or the like. As the inorganic solid electrolyte, there may be used materials that are publicly known in all solid lithium-ion secondary batteries or the like (e.g., oxide-based solid electrolyte, sulfide-based solid electrolyte, halide-based solid electrolyte, etc.).

The housing can 15 is in a cylindrical shape made of metal with a bottom portion 15b at one end and an opening portion 15c at the other end. Here, the bottom portion 15b is a disk-shaped section located below the body portion 15a, which vertically stands up in an up-down direction. The opening portion 15c is a cylindrical section located above the body portion 15a. Between the opening portion 15c and the body portion 15a, some region of the side surface protrudes inward to form a grooved portion 21. The grooved portion 21 supports the sealing assembly 16 with its upper surface as described below. The grooved portion 21 may be provided along the circumferential direction of the housing can 15, for example, formed annularly over the entire circumference of the housing can 15. The grooved portion 21 can be formed, for example, by pressing the side surface portion of the housing can 15 from the outside.

The opening portion 15c of the housing can 15 is closed by the sealing assembly 16, so that the inside of the cylindrical non-aqueous electrolyte secondary battery 10 is sealed. In the present embodiment, the sealing assembly 16 is crimped and fixed between the grooved portion 21 and an opening end 15e of the housing can 15 via a gasket 27.

Insulating plates 17 and 18 are provided above and below the electrode assembly 14, respectively. A positive electrode lead 19 extends upward through a through-hole of the insulating plate 17 and is welded to the lower surface of a filter 22, which is a bottom plate of the sealing assembly 16. In the cylindrical non-aqueous electrolyte secondary battery 10, a cap 26, which is the top plate of the sealing assembly 16 that is electrically connected with the filter 22, serves as a positive electrode terminal. On the other hand, a negative electrode lead 20 extends toward the bottom of the housing can 15 through a through-hole of the insulating plate 18, and is welded to the inner surface of the bottom of the housing can 15. In the cylindrical non-aqueous electrolyte secondary battery 10, the housing can 15 serves as a negative electrode terminal.

The sealing assembly 16 includes the filter 22, a lower vent member 23, an insulating member 24, an upper vent member 25, and the cap 26 stacked in this order from the side of the electrode assembly 14. Each member constituting the sealing assembly 16 has, for example, a disc shape or a ring shape, and each member except the insulating member 24 is electrically connected to each other. The lower vent member 23 and the upper vent member 25 are connected to each other at their respective center portions with the insulating member 24 interposed between their respective circumferential edge portions. When the internal pressure of the battery rises due to abnormal heat generation, the lower vent member 23 breaks, for example, and this causes the upper vent member 25 to swell toward the cap 26 and be separated from the lower vent member 23, so that their electrical connection is cut off. As the internal pressure further rises, the upper vent member 25 breaks, so that gas is exhausted through an opening hole 26a of the cap 26.

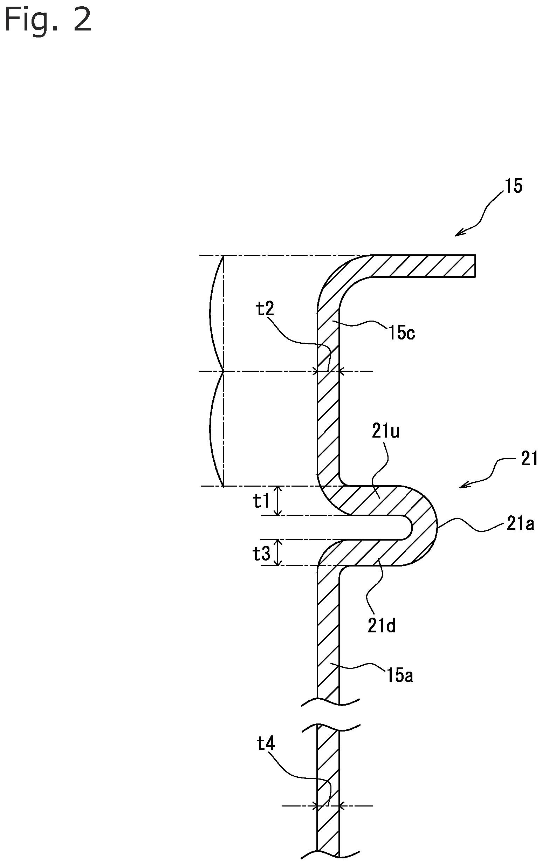

Now, the housing can 15 is described in detail with reference to FIG. 2. FIG. 2 is an enlarged view of the vicinity of the grooved portion 21 of the housing can 15 in FIG. 1.

As mentioned above, the grooved portion 21 is formed between the opening portion 15c and the body portion 15a, and the diameter of the housing can 15 in the grooved portion 21 is smaller than that in the body portion 15a. The grooved portion 21, which has a smallest diameter portion 21a that is the innermost of the battery, can be divided into a groove upper portion 21u that is located closer to the opening portion 15c than the smallest diameter portion 21a and a groove lower portion 21d that is located closer to the bottom portion 15b than the smallest diameter portion 21a. In the example shown in FIG. 2, the smallest diameter portion 21a is located in substantially the center of the grooved portion 21 in the up-down direction but is not limited to this example.

The groove upper portion 21u has a thickness t1 that is larger than a thickness t2 of the opening portion 15c. This can reduce the risk of damage to the housing can 15. Specifically, the grooved portion 21 with such a shape can withstand the pressure that presses the sealing assembly 16 into the opening portion 15c of the housing can 15 during the manufacture of the battery. In addition, the grooved portion 21 with such a shape can also withstand strong pressure applied to the sealing assembly in the state of the battery.

The thickness t1 of the groove upper portion 21u is the thickness of the thickest portion in the groove upper portion 21u that is observed on the cross-section along the axial direction of the cylindrical non-aqueous electrolyte secondary battery 10. In addition, the thickness t2 of the opening portion 15c is the thickness at a position half the height of the opening portion 15c in the up-down direction on the cross-section along the axial direction of the cylindrical non-aqueous electrolyte secondary battery 10.

The thickness t1 of the groove upper portion 21u and the thickness t2 of the opening portion 15c preferably satisfy a relationship of t1 / t2 ≥ 1.2. As a result, the effect of reducing the risk of damage to the housing can 15 mentioned above becomes more pronounced. The upper limit of t1 / t2 is, for example, 2. More preferably, t1 and t2 satisfy a relationship of 1.4 ≤ t1 / t2 ≤ 1.6.

A thickness t3 of the groove lower portion 21d that is located closer to the bottom portion 15b than the smallest diameter portion 21a in the grooved portion 21, the thickness t1 of the groove upper portion 21u, and the thickness t2 of the opening portion 15c preferably satisfy a relationship of t2 < t3 < t1. As a result, the durability of the grooved portion 21 against the pressure from the upper part of the battery is enhanced, and therefore, the effect of reducing the risk of damage to the housing can 15 becomes more pronounced. Here, the thickness t3 of the groove lower portion 21d is the thickness of the thickest portion in the groove lower portion 21d that is observed on the cross-section along the axial direction of the cylindrical non-aqueous electrolyte secondary battery 10.

A thickness t4 of the body portion 15a and the thickness t2 of the opening portion 15c may satisfy, for example, a relationship of 0.6 ≤ t2 / t4 ≤ 1.5, and may be 0.8 ≤ t2 / t4 ≤ 1.2. The thickness t4 of the body portion 15a and the thickness t2 of the opening portion 15c may be substantially the same. Here, the thickness t4 of the body portion 15a is the thickness at a position half the height of the body portion 15a in the up-down direction on the cross-section along the axial direction of the cylindrical non-aqueous electrolyte secondary battery 10.

There is no particular restriction on how to make the thickness t1 of the groove upper portion 21u larger than the thickness t2 of the opening portion 15c in the housing can 15, though t1 > t3 can be satisfied, for example, by increasing the thickness of the portion corresponding to the groove upper portion 21u of the housing can 15 before forming the groove upper portion 21u. In addition, the thickness t3 of the groove lower portion 21d can be increased by the same method as described above.

As described in the foregoing, the safety of the cylindrical non-aqueous electrolyte secondary battery 10 can be improved by increasing the thickness of the groove upper portion 21u of the grooved portion 21.

The present disclosure is further described with the embodiment described below.

### Configuration 1

A cylindrical non-aqueous electrolyte secondary battery, comprising: a housing can that is in a cylindrical shape with a bottom portion at one end and an opening portion at the other end; an electrode assembly and a non-aqueous electrolyte that are housed in a body portion of the housing can; and a sealing assembly that seals the opening portion, in which between the opening portion and the body portion, a grooved portion is provided in such a manner that a diameter of the housing can in the grooved portion is smaller than that in the body portion, and a groove upper portion that is located closer to the opening portion than a smallest diameter portion in the grooved portion has a thickness t1 that is larger than a thickness t2 of the opening portion.

### Configuration 2

The cylindrical non-aqueous electrolyte secondary battery, according to Configuration 1, in which the grooved portion is formed annularly over an entire circumference of the housing can.

### Configuration 3

The cylindrical non-aqueous electrolyte secondary battery, according to Configuration 1 or 2, in which the t1 and the t2 satisfy a relationship of t1 / t2 ≥ 1.2.

### Configuration 4

The cylindrical non-aqueous electrolyte secondary battery, according to any one of Configurations 1 to 3, in which a thickness t3 of the groove lower portion that is located closer to the bottom portion than the smallest diameter portion in the grooved portion, the thickness t1, and the thickness t2 satisfy a relationship of t2 < t3 < t1.

### Configuration 5

The cylindrical non-aqueous electrolyte secondary battery, according to any one of Configurations 1 to 4, in which a thickness t4 of the body portion and the t2 satisfy a relationship of 0.6 ≤ t2 / t4 ≤ 1.5.

### REFERENCE SIGNS LIST

10 Secondary battery, 11 Positive electrode, 12 Negative electrode, 13 Separator, 14 Electrode assembly, 15 Housing can, 15a Body portion, 15b Bottom portion, 15c Opening portion, 15e Opening end, 16 Sealing assembly, 17, 18 Insulating plate, 19 Positive electrode lead, 20 Negative electrode lead, 21 Grooved portion, 21a Smallest diameter portion, 21u Groove upper portion, 21d Groove lower portion, 22 Filter, 23 Lower vent member, 24 Insulating member, 25 Upper vent member, 26 Cap, 26a Opening hole, 27 Gasket

## Claims

1. A cylindrical non-aqueous electrolyte secondary battery, comprising:
a housing can that is in a cylindrical shape with a bottom portion at one end and an opening portion at the other end;
an electrode assembly and a non-aqueous electrolyte that are housed in a body portion of the housing can; and
a sealing assembly that seals the opening portion, wherein
between the opening portion and the body portion, a grooved portion is provided in such a manner that a diameter of the housing can in the grooved portion is smaller than that in the body portion, and
a groove upper portion that is located closer to the opening portion than a smallest diameter portion in the grooved portion has a thickness t1 that is larger than a thickness t2 of the opening portion.

2. The cylindrical non-aqueous electrolyte secondary battery, according to claim 1, wherein the grooved portion is formed annularly over an entire circumference of the housing can.

3. The cylindrical non-aqueous electrolyte secondary battery, according to claim 1, wherein the t1 and the t2 satisfy a relationship of t1 / t2 ≥ 1.2.

4. The cylindrical non-aqueous electrolyte secondary battery, according to claim 1, wherein a thickness t3 of the groove lower portion that is located closer to the bottom portion than the smallest diameter portion in the grooved portion, the thickness t1, and the thickness t2 satisfy a relationship of t2 < t3 < t1.

5. The cylindrical non-aqueous electrolyte secondary battery, according to claim 1, wherein a thickness t4 of the body portion and the t2 satisfy a relationship of 0.6 ≤ t2 / t4 ≤ 1.5.
